# EUROPEAN PATENT APPLICATION

(11) **EP 4 438 891 A1**
(43) Date of publication of application: **02.10.2024**
(21) Application number: 23382292.3
(22) Date of filing: 28.03.2023
(51) Int. Cl.: F03D 7/02, F03D 80/00

(54) **METHOD OF CONTROLLING A WIND TURBINE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention describes a method of controlling a wind turbine (2), which method comprises the steps of determining a noise budget (N_{budget}) for each of a plurality of operating modes (M; M1, ..., M7) of the wind turbine (2); establishing the current operating mode (M; M1, ..., M7) of the wind turbine (2); and limiting the motor speeds (ω_{A1} - ω_{An}) of each of a plurality of motor-driven auxiliary devices (A1, ..., An) of the wind turbine (2) such that the noise budget (N_{budget}) is not exceeded. The invention further describes a wind turbine (2) comprising a control arrangement (1) configured to operate the wind turbine (2) in any of a plurality of operating modes (M; M1, ..., M7) and to limit the motor speeds (ω_{A1} - ω_{An}) of each of the plurality of motor-driven auxiliary devices (A1, ..., An) such that a previously established noise budget (N_{budget}) for the current operating mode (M; M1, ..., M7)is not exceeded.

## Description

### Background

The power output of a wind turbine is generally determined by wind speed, rotor speed and pitch angle. A wind turbine can generate power between a cut-in wind speed and a cut-out wind speed, and the pitch angle can be adjusted to maximise power output at any given rotor speed. It is therefore usual to define a wind turbine mode of operation in terms of rotor speed and pitch angle.

In order to obtain permission to install a wind turbine near an inhabited area, it is usually necessary to comply with applicable noise regulations at an immission point. Acoustic noise arriving the immission point will have been attenuated to some extent, and the overall attenuation will depend on several factors such as the terrain over which the air travels, the air temperature, etc. For example, the operator of the wind turbine may be required to control the wind turbine so that the operational noise (the noise emanating from the wind turbine during operation) is not perceived to exceed an upper threshold at an immission point. The operator may be fined if the perceived noise level exceeds the upper threshold.

While the main contributor to the noise of a typical horizontal-axis wind turbine is its aerodynamic rotor, any auxiliary systems - in particular any motor-driven devices - also contribute to the total noise. The speeds of such motors are closely linked to the wind turbine mode of operation. For example, the speed of a cooling system fan may be directly proportional to the aerodynamic rotor speed. An increase in motor speed of an auxiliary device can be required at various times, for example to increase the motor speed of a cooling system fan to reduce the temperature of the generator or to reduce the temperature in an electrical cabinet, in the converter etc. However, increasing the motor speed of a device generally makes it louder, and may push the total noise level above the upper threshold. To avoid a noise regulation violation, it is then necessary to reduce the temperature by curtailing the output power, for example by lowering the speed of the aerodynamic rotor or by decreasing the rotor blade pitch angles. However, having to curtail power in order to comply with noise regulations is undesirable from the operator's point of view.

In a more considered approach, the operational noise of the wind turbine can be examined to identify other contributors and these may be optimised to reduce the overall noise output. Various motor-driven auxiliary devices may contribute noticeably to the overall noise level of an operational wind turbine, for example the fans of a cooling system may be significant noise contributors. In one approach, the noise level of a motor-driven auxiliary may be reduced by enclosing it in soundproofing cladding. In another approach, a motor-driven auxiliary may be constructed to a tighter noise specification, requiring more expensive components. Such noise mitigation measures add significantly to the overall cost of a wind turbine, but may still be insufficient to keep the wind turbine noise below the permissible level during an operational mode, so that the power output of the wind turbine may still need to be curtailed in order to comply with the applicable noise regulations.

It is therefore an object of the invention to provide a more straightforward way of controlling a wind turbine.

This object is achieved by the claimed wind turbine control arrangement, and by the claimed wind turbine.

### Description

According to the invention, the method of controlling a wind turbine comprises the steps of establishing the current mode of operation of the wind turbine; determining a noise budget for the wind turbine in that mode of operation; and limiting the motor speeds of each of a plurality of motor-driven auxiliary devices of the wind turbine to remain within the noise budget is not exceeded.

As will be explained below, the inventive method ensures that in any mode of operation of the wind turbine, the motor speed of any auxiliary device does not exceed a predetermined "maximum permissible speed" for that auxiliary device in that mode of operation. The maximum permissible motor speed of a motor-driven auxiliary device in a mode of operation of the wind turbine shall be understood to be the highest allowable rotational velocity of the motor of that auxiliary device during that mode of operation (i.e. the "maximum permissible motor speed" in an operating mode shall not be interpreted as the rated speed of the motor, which should never be exceeded). The maximum permissible motor speeds for the auxiliary devices in each operating mode are determined in advance as will be explained below. In the following, the terms "maximum permissible motor speed" and "highest allowable motor speed" may be used interchangeably.

The motor speed of a motor-driven auxiliary device is essentially determined by the momentary mode of operation of the wind turbine. Since the aerodynamic rotor speed and/or pitch angle essentially determine the wind turbine mode of operation, it is generally the case that any motor-driven auxiliary device will have to "work harder" at higher power output modes, i.e. modes of operation with high power outputs are generally associated with higher motor speeds of the auxiliary devices. In a conventional control approach, a wind turbine may be down-regulated or curtailed instead of running an auxiliary device at an even higher motor speed, on the assumption that the higher motor speeds will result in an increase of the noise from the wind turbine.

The inventive method is an improvement over the conventional approach, since the highest allowable motor speeds of the auxiliary devices have been determined in advance for each of the wind turbine's modes of operation, so that a controller need not expend effort on identifying potential problems if the motor speed of an auxiliary device needs to be increased for whatever reason: instead, if a requested increase in motor speed for an auxiliary device does not exceed its highest allowable motor speed, the controller simply approves the request; otherwise the request is denied.

In this way, the inventive method greatly simplifies control of a wind turbine during its various operating modes. While significant initial effort may be needed to identify the highest allowable motor speeds for the various relevant auxiliary devices, this effort need only be expended once, for example during a design phase for a wind turbine type. Thereafter, any wind turbine of that type can benefit from the simplified control approach.

According to the invention, the wind turbine comprises an aerodynamic rotor arranged to drive a generator; a plurality of motor-driven auxiliary devices; and means of determining a noise budget for the wind turbine in its current mode of operation; and a control arrangement configured to limit the motor speeds of the motor-driven auxiliary devices of the wind turbine to remain within the noise budget for the current operating mode.

Any units or modules for carrying out the steps of the inventive method can be completely or partially realised as one or more software modules running on a processor of a wind turbine controller. An existing system can be updated, with relatively little effort, to install and run software modules to carry out steps of the inventive method.

Particularly advantageous embodiments and features of the invention are given by the dependent claims, as revealed in the following description. Features of different claim categories may be combined as appropriate to give further embodiments not described herein.

In the following, a motor-driven auxiliary device shall be understood as a motor-driven device that is part of an auxiliary system, for example a yaw drive of the yaw system; a pump of a cooling system, etc. It may be assumed that the motor of such a motor-driven auxiliary device is a variable-speed motor. Of course, the wind turbine may comprise any number of other auxiliary systems or devices that cannot be regulated by adjusting a motor speed.

The wind turbine can be a direct-drive wind turbine, for which the primary source of acoustic noise is the aerodynamic rotor, and for which the secondary noise sources are motor-driven auxiliary systems. Alternatively, the wind turbine can have an indirectly driven generator, in which case the primary sources of acoustic noise are the aerodynamic rotor and mechanical components of the geartrain. Here also, secondary noise sources can be various motor-driven auxiliary systems.

There are various ways of controlling a wind turbine. Generally, a wind turbine can become operational (i.e. can commence exporting power to the grid) above a certain cut-in wind speed. Between this cut-in speed and an upper cut-off wind speed, the wind turbine can export power. In the following, it shall be assumed that a wind turbine is operated in any one of several modes. For example, a wind turbine may commence operating in a mode corresponding to a lowest wind speed band and move up and down through the remaining modes as the wind speed fluctuates. The final mode may correspond to the highest wind speed band in which that wind turbine type can safely operate.

As explained above, a wind turbine mode of operation can be combination of rotor speed and pitch angle, however there can be other equally valid ways of defining the modes of operation of a wind turbine. Each mode of operation can be associated with certain expected conditions in the various components of the wind turbine, for example the temperature in the generator and/or a power converter can be expected to reach a maximum in one or more higher modes of operation. The operation of the relevant auxiliary systems is therefore closely related to the operating modes, e.g. more cooling may be required in high power modes, less cooling can be required in low-power modes. Each mode of operation can affect the generator in a largely predictable manner, for example it can be expected that at low wind speeds, the temperature in a power converter remains low and does not require much cooling; equally, it can be expected that the temperature in a power converter is highest when the wind turbine is exporting its rated power output at higher wind speeds. Such behaviour affects the auxiliaries, for example a cooling system must "work harder" to keep the temperature of a critical system within safe limits, e.g. a fan of a cooling system must rotate faster, and therefore also louder. The invention is based on the insight that the total acoustic noise of a wind turbine can be expressed as the sum of the individual contributions and, for each operating mode of the wind turbine, it is possible to limit the individual contributions of motor-driven noise sources.

In a particularly preferred embodiment of the invention, the maximum permissible motor speeds of the motor-driven auxiliary devices during a wind turbine mode of operation are established on the basis of a noise budget for that mode of operation. In the context of the invention, the expression "noise budget" shall be understood as the total permissible noise that may emanate from a wind turbine in a specific operating mode. The noise budget can be computed in any suitable way. In a preferred embodiment of the invention, the noise budget is computed on the basis of sound power level as defined in the IEC-61400-11 standard. Since the sound power level (referred to herein more loosely as "noise") of a wind turbine is related to its power output, each mode of operation (e.g. a range of rotor speeds and pitch angles etc.) may be associated with a noise budget.

The freedom to regulate the motor-driven auxiliary devices will depend on the difference between the noise budget and the total wind turbine noise that is being generated at any one time. As explained above, the total wind turbine noise comprises at least the aerodynamic rotor noise and the noise contributions of any active motor-driven auxiliary devices. Other noise contributions may also be taken into consideration when estimating the total wind turbine noise.

The inventive method preferably comprises a preparatory step of establishing the highest allowable motor speed of each motor-driven auxiliary device for any mode of operation of the wind turbine. In other words, for each mode of operation, a set of maximum permissible motor speeds is established, specifying the highest allowable motor speed of each motor-driven auxiliary device. Of course, during any one operating mode, the motor speed of an auxiliary device may be lower than its maximum permissible speed. Already in this preparatory stage, for example in a design phase for a wind turbine type, it is possible to accurately estimate or predict the greatest magnitude of noise emanated from the wind turbine during each of its modes of operation, by adding the aerodynamic rotor noise and the estimated noise from the auxiliary devices running at their maximum allowable speeds in each case.

In a preferred embodiment of the invention, the method comprises a preparatory step of estimating the noise contributions from each of a plurality of motor-driven auxiliary devices during each of the wind turbine's mode of operation. During this preparatory stage, a relationship between motor speed and noise can be established for any of the motor-driven auxiliary devices. For example, the noise contributions of the motor-driven auxiliary devices and the aerodynamic rotor noise can be measured at already installed wind turbines of the same or similar type (this can be done using established methods based on a standard such as IEC-61400-11); alternatively or in addition the noise contributions of the motor-driven auxiliary devices and the aerodynamic rotor noise can be estimated or simulated using suitable models. This information, collected in the preparatory stage, can then be deployed by a wind turbine controller to simplify control of a wind turbine during its lifetime.

The established speed-to-noise relationships can be expected to apply to similar devices and similar wind turbines, i.e. a specific motor-driven auxiliary device will have the same motor-speed to noise relationship regardless of which wind turbine it is installed in; a certain type of wind turbine will have the same wind-speed to noise relationship regardless of where it is installed. Therefore, it can be enough to establish these relationships once, and the information can be used in subsequent installations. For example, the noise contributions of motor-driven auxiliary devices and the aerodynamic rotor noise of a certain wind turbine type can be determined in advance, for any or all operating modes of that wind turbine type, using empirical methods, simulations, models or any combination of such techniques.

In a preferred embodiment of the invention, a look-up table (LUT) is compiled, in which each of a plurality of wind turbine operating modes is related to a set of maximum permissible motor speeds of the motor-driven auxiliary devices. These highest allowable motor speeds can be determined in advance as indicated above. In one example, a wind turbine may be configured to operate in any one of seven operating modes between its cut-in and cut-out speeds, and may comprise four motor-driven auxiliary devices that contribute significantly to the overall noise output. For each of these seven operating modes, a LUT can specify a maximum permissible motor speed for each of the four motor-driven auxiliary devices. The LUT can be interpreted as follows: when the motor-driven auxiliary devices are operating at their maximum permissible speeds in a specific operating mode, the total noise emanating from the wind turbine in that mode of operation will not exceed the predetermined noise budget for that mode. As long as the motor speeds of the auxiliary devices do not exceed their maximum permissible speeds, the total wind turbine noise also does not exceed its upper limit or noise budget.

In a preferred embodiment of the invention, the control arrangement comprises a noise estimation module configured to estimate the total momentary noise generated by the wind turbine. For example, the total momentary noise may comprise the aerodynamic rotor noise and the noise contributions of any active motor-driven auxiliary device.

If the speed of a motor-driven auxiliary device cannot be increased without exceeding the noise budget for the current operating mode, the wind turbine controller can proceed as appropriate, for example by curtailing the power output or moving to a "lower" mode if this is the only way to ensure compliance with the noise regulations.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a wind turbine located at a distance from an inhabited region;
Figure 2 shows a conventional horizontal-axis wind turbine;
Figure 3 illustrates an exemplary relationship between wind speed (X-axis) and output power;
Figure 4 shows an exemplary table relating wind turbine operating modes to noise output;
Figure 5 shows an exemplary table relating the operating modes of Figure 4 to the noise contributions of motor-driven auxiliary devices;
Figure 6 is a block diagram to illustrate the inventive control approach;
Figure 7 is a flowchart to illustrate steps of the inventive method.

In the diagrams, like numbers refer to like objects throughout. Objects in the diagrams are not necessarily drawn to scale.

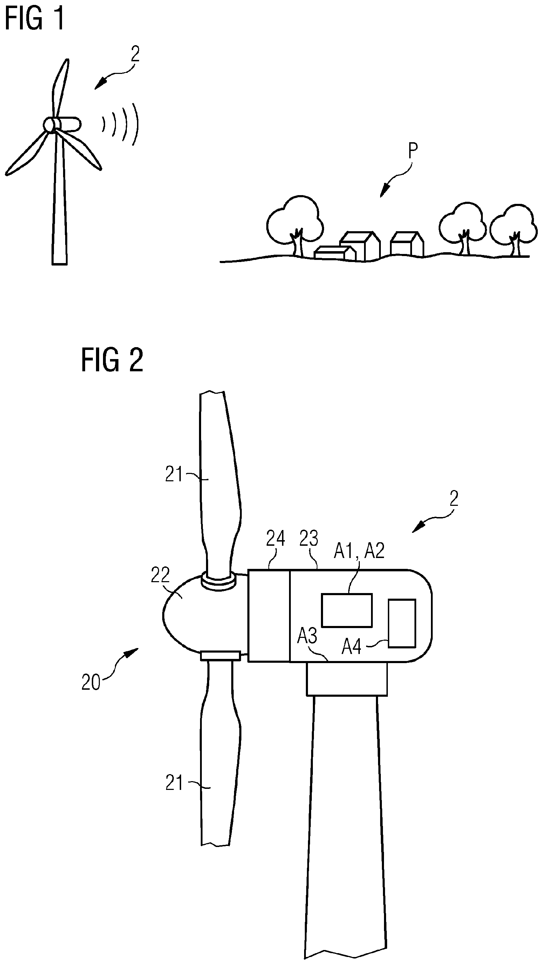

Figure 1 shows a wind turbine 2 located at a distance from an inhabited region. The wind turbine can be a solitary installation, or one of many wind turbines of a wind farm. Permission to install the wind turbine 2 at that location may be given on the condition that acoustic noise from the wind turbine does not exceed allowed thresholds at the inhabited region or immission point P. The noise threshold during daytime hours may be higher than at night. The main cause of acoustic noise perceived at the immission point P is the aerodynamic rotor of the wind turbine 2, and this noise is caused by the motion of the rotor blades through the air. In the case of a wind turbine with a transmission system, the geartrain or gearbox can be a significant contributor. Various motor-driven auxiliary devices such as those described above are further significant contributors to the total noise emanating from the wind turbine 2.

As explained above, a known approach to reducing the acoustic noise in order to remain below the permitted acoustic noise threshold can involve reducing the speed of rotation of the aerodynamic rotor and/or decreasing the rotor blade pitch angle. However, such corrective measures effectively curtail the output power and result in a loss of revenue.

Figure 2 shows a conventional horizontal-axis wind turbine 2, indicating some of the more relevant noise sources. The diagrams indicate the aerodynamic rotor 20, with rotor blades 21 mounted to a hub 22 to drive a generator 24. The diagram shows a direct-drive wind turbine 2, for which the most significant noise contributor is the aerodynamic rotor 20. In the case of a wind turbine with a geartrain between the aerodynamic rotor noise and the generator, the gearbox is a significant noise contributor. Other contributors to the overall noise level in each case are motor-driven devices A1, A2, A3 of a cooling system, a yaw drive, a lubrication system, a service elevator, etc.

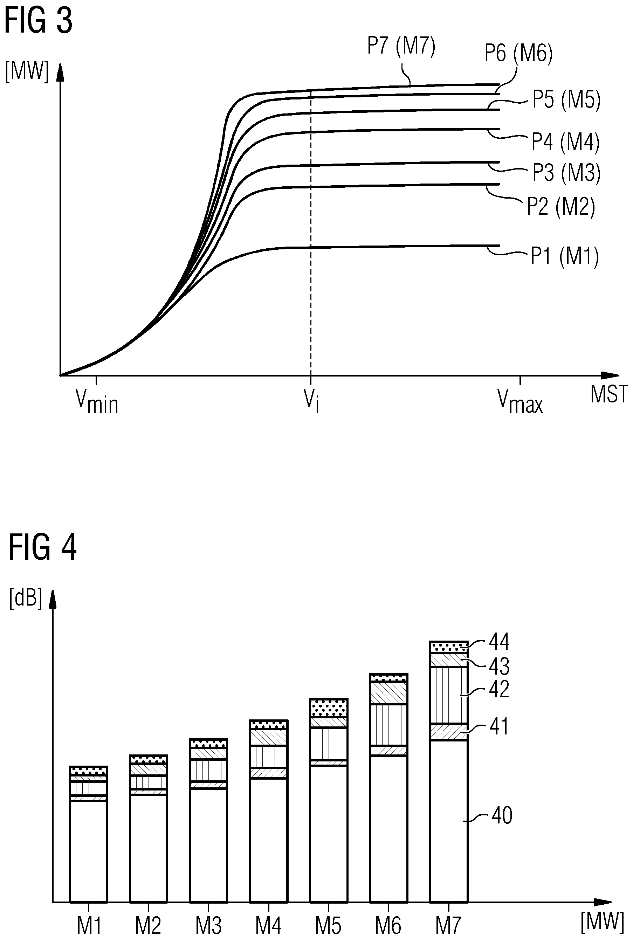

The noise emanating from a wind turbine is directly related to its power output. Figure 3 illustrates exemplary relationships between wind speed (X-axis) and output power (Y-axis) between a cut-in wind speed vₘᵢₙ and a cut-out wind speed vₘₐₓ. At any intermediate wind speed vᵢ, the output power will depend on the mode in which the wind turbine is being operated. Here, the different operating modes M1 - M7 are indicated in brackets for each power curve P1 - P7.

As explained above, the total noise emanating from the wind turbine comprises essentially the aerodynamic rotor noise as well as noise contributions from any active motor-driven auxiliary device. Figure 4 illustrates an exemplary relationship between wind turbine operating modes M1 - M7 and noise output, in the form of a bar graph. Each contributor to the overall noise is indicated as a patterned portion of a bar. In each case, the main contributor is aerodynamic rotor noise, indicated by the largest portion 40. As the output power increases, the noise levels of the auxiliary devices generally also increase. These noise contributions are indicated by the smaller portions 41 - 44. The "size" of each individual noise contribution 41 - 44 in an operating mode is determined by the maximum motor speed for that auxiliary device in that operating mode and can be established in advance, for example by collecting empirical data for wind turbines of that type, and/or by simulation as described above. The sum of these maximum contributions 40 - 44 is the noise budget N_{budget} for that operating mode. As indicated here, the size of the noise budget N_{budget} depends on the sound power level of the wind turbine in the corresponding operating mode M1 - M7.

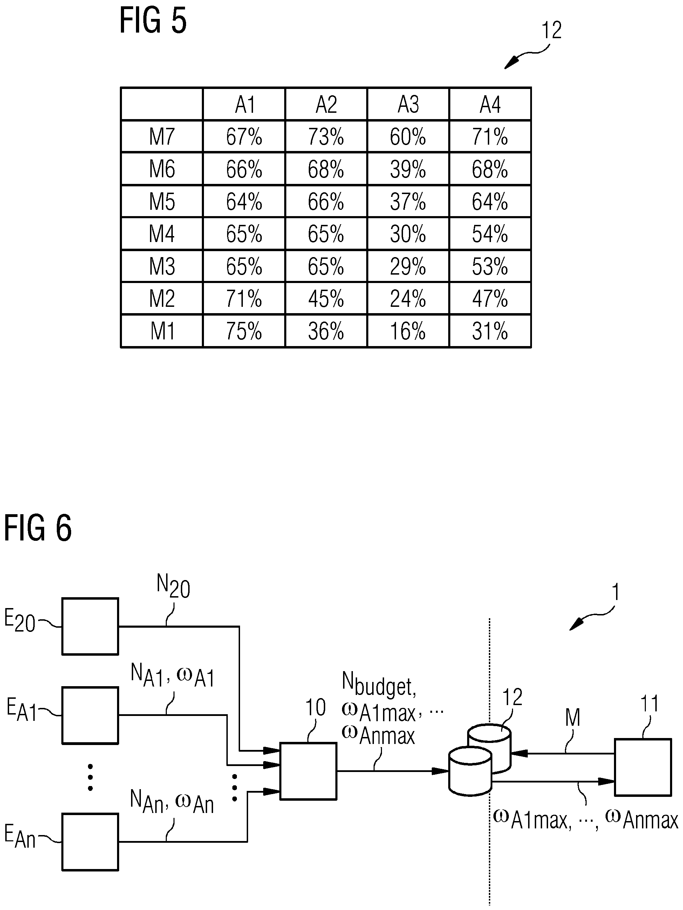

Figure 5 shows an exemplary table relating each of seven operating modes of Figure 4 to a set of highest allowable motor speeds ω_{A1max}, ..., ω_{Annax} of its motor-driven auxiliary devices A1 - An. In this exemplary embodiment, each table entry is expressed as a percentage of the rated motor speed of the respective auxiliary device. In this case, the wind turbine has four motor-driven auxiliary devices: for example motor-driven fans A1, A2 of a cooling system, a motor-driven oil pump A3 of a hydraulic system; a motor-driven fan A4 of a yaw system. The table can be understood as follows: in Mode M5, the motor speed of device A2 should not exceed 66% of its rated motor speed; in mode M1, the motor speed of device A4 should not exceed 31% of its rated motor speed. As long as these upper limits are complied with, the noise budget for any of the operating modes will never be exceeded.

Figure 6 illustrates the inventive approach. In a preparatory stage (indicated on the left-hand-side of the diagram), the noise generated by the various noise sources N₂₀, N_{A1} - N_{An} of a wind turbine during each mode of operation is estimated as indicated on the left, with noise estimators E₂₀, E_{A1} - E_{An} that estimate the noise contribution N₂₀ of the aerodynamic rotor noise and noise contributions N_{A1} - N_{An} of the motor-driven auxiliary devices A1 - An. These noise estimations N₂₀, N_{A1} - N_{An} can be done as described above, using simulation models and/or empirical data. For each mode, the highest sound power level is determined (the loudest rotor noise added to the loudest combined noise from the auxiliary devices) determines the noise budget N_{budget} for that operating mode. For example, in one mode, the noise budget N_{budget} or maximum permissible wind turbine noise can be determined to be 100 dB; in another mode, the noise budget N_{budget} can be determined to be 110 dB. The diagram shows a noise budget determination module 10 which relates each operating mode to the estimated maximum sound power level (the sum of the largest contributions N₂₀, N_{A1} - N_{An}) in that mode. The noise of each motor-driven auxiliary device A1 - An is related to its motor speed ω_{A1} - ω_{An}, so that the highest allowable motor speeds in each operating mode can be identified. In a subsequent step, the noise budget N_{budget} and the set of highest allowable motor speeds ω_{A1max} - ω_{Anmax}, are stored in a memory, for example in the form of a look-up table 12, for later use during operation of a wind turbine of that type.

During operation of a wind turbine of that type, a controller 10 of the wind turbine's control arrangement 1 is configured to consult the look-up table 12, for example whenever it receives a request to increase the motor speed of an auxiliary device. Knowing the current operating mode M, the controller 11 retrieves the relevant highest allowable motor speed ω_{A1max} - ω_{Anmax} from the look-up table 12 and then approves the request if the requested increase does not exceed the maximum permissible motor speed in that mode. Otherwise, the controller denies the request.

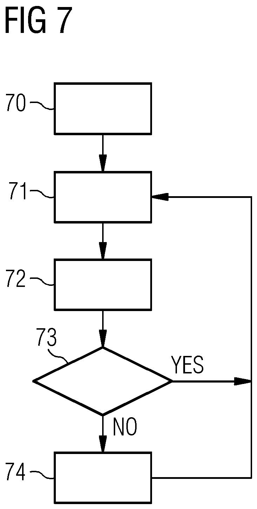

Figure 7 is a flowchart to illustrate steps of the inventive method. In a preliminary step 70, the maximum permissible motor speeds ω_{A1max} - ω_{Anmax} of each of a plurality of motor-driven auxiliary devices are determined for each mode of operation of a specific wind turbine type.

During operation of a wind turbine of that type, a controller receives a request to increase the motor speed of an auxiliary device in step 71. In step 72, the controller consults the look-up table 12 to retrieve the maximum permissible motor speed for that auxiliary device. In step 73, the controller decides if the requested increase is allowable. If not, some other control measure may be performed in step 74.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements. The mention of a "unit" or a "module" does not preclude the use of more than one unit or module.

## Claims

1. A method of controlling a wind turbine (2), which method comprises the steps of
- determining a noise budget (N_{budget}) for each of a plurality of operating modes (M; M1, ..., M7) of the wind turbine (2);
- establishing the current operating mode (M; M1, ..., M7) of the wind turbine (2); and
- limiting the motor speeds (ω_{A1} - ω_{An}) of each of a plurality of motor-driven auxiliary devices (A1, ..., An) of the wind turbine (2) such that the noise budget (N_{budget}) is not exceeded.

2. A method according to the preceding claim, wherein a noise budget (N_{budget}) is determined from a previously established relationship between the output power and the sound power level of the wind turbine (2) in each operating mode (M; M1, ..., M7).

3. A method according to any of the preceding claims, comprising a preparatory step of estimating the total noise (N_{s um}) emanating from the wind turbine (2) in each operating mode (M; M1, ..., M7).

4. A method according to any of the preceding claims, wherein the total noise emanating from the wind turbine (N_{s um}) comprises aerodynamic rotor noise (N₂₀) and noise (N_{A1} - N_{An}) from the motor-driven auxiliary devices (A1, ..., An).

5. A method according to any of the preceding claims, comprising a step of estimating the noise (N_{A1} - N_{An}) emanating from a motor-driven auxiliary device (A1, ..., An) in each operating mode (M; M1, ..., M7).

6. A method according to any of the preceding claims, comprising a step of determining, for each of a plurality of discrete wind turbine operating modes (M; M1, ..., M7), the maximum permissible motor speed (ω_{A1max} - ω_{Anmax}) of each motor-driven auxiliary device (A1, ..., An).

7. A method according to the preceding claim, comprising a step of compiling a look-up table (12) relating each wind turbine operating mode (M; M1, ..., M7) to the maximum permissible motor speeds (ω_{A1max} - ω_{Anmax}) of the motor-driven auxiliary devices (A1, ..., An) .

8. A method according to any of the preceding claims, wherein the noise budget (N_{budget}) is determined using empirical data and/or simulation models.

9. A wind turbine (2) comprising
- an aerodynamic rotor (20) arranged to drive a generator (24) ;
- a plurality of motor-driven auxiliary devices (A1, ..., An) ; and
- a control arrangement (1) configured to operate the wind turbine (2) in any of a plurality of operating modes (M; M1, ..., M7) and to limit the motor speeds (ω_{A1} - ω_{An}) of each of the plurality of motor-driven auxiliary devices (A1, ..., An) such that a previously established noise budget (N_{budget}) for the current operating mode (M; M1, ..., M7)is not exceeded.

10. A wind turbine according to the preceding claim, wherein a motor-driven auxiliary device (A1, ..., An) comprises a variable-speed drive motor.

11. A wind turbine according to the preceding claim, wherein a motor-driven auxiliary device (A1, ..., An) is any of: a fan, a pump, a yaw drive, a lubrication system, a service elevator.

12. A control arrangement according to any of claims 9 to 11, comprising a look-up table (12) relating each of a plurality of wind turbine operating modes (M; M1, ..., M7) to a set of maximum permissible motor speeds (ω_{A1max} - ω_{Anmax}) for the motor-driven auxiliary devices (A1, ..., An).

13. A wind turbine according to the preceding claim, wherein the look-up table (12) is compiled in a preparatory stage using empirical methods and/or simulations.

14. A wind turbine according to claim 12 or claim 13, wherein a look-up table (12) is compiled for a specific wind turbine type.

15. A computer program product comprising a computer program that is directly loadable into a memory of a controller (1) of the claimed wind turbine (2), and which comprises program elements for performing steps of the claimed method when the computer program is executed by the controller (1).
